# EUROPEAN PATENT APPLICATION

(11) **EP 2 431 610 A1**
(43) Date of publication of application: **21.03.2012**
(21) Application number: 10764125.0
(22) Date of filing: 15.04.2010
(51) Int. Cl.: F03G 6/00, F01K 17/04, F01K 13/00

(54) **METHOD FOR INCREASING THE NET ELECTRIC POWER OF SOLAR THERMAL POWER STATIONS**

(30) Priority: 16.04.2009 ES 200901000
(71) Applicant: Universidad Politécnica De Madrid, 28040 Madrid (ES)
(72) Inventor: PLATERO GAONA, Carlos Antonio, E-28040 Madrid (ES); BLÁZQUEZ GARCÍA, Francisco, E-28040 Madrid (ES); REDONDO CUEVAS, Marta, E-28040 Madrid (ES); RODRÍGUEZ ARRIBAS, Jaime, E-28040 Madrid (ES); BARRIGUETE DÍEZ, María Isabel, E-28040 Madrid (ES); FRÍAS MARÍN, Pablo, E-28040 Madrid (ES)
(74) Representative: ABG Patentes, S.L.
(86) International application number: PCT/ES2010/000160
(87) International publication number: WO 2010/119150

(57) **Abstract**

The present invention allows increasing the net electric power supplied to the network by the solar thermal power plants of the cylindrical parabolic collector type by using the solar field in a more efficient manner, generating steam to drive the main ancillaries by means of steam turbines (turbo pumps), reducing electric consumption of the ancillary services and therefore increasing the net electric power of the plant.

On days when the solar radiation is greater than the designed radiation, part of the solar field must stop being used since the generator and the turbine would exceed its designated power. The present system proposes harnessing the unused portion of the solar field for generating steam to drive the main ancillaries of the plant, energy which would otherwise not be harnessed.

In addition, the overall operating performance of the ancillary service pumps is better when using steam to drive the pumps through a steam turbine (turbo pumps) instead of driving them with electric motors (motor pumps).

## Description

### Field of the Invention

The present invention is of application for solar thermal power plants based on capturing energy through a thermo fluid and subsequent steam generation for generating electric energy through a steam turbine and an electric generator.

### Background of the Invention

Solar thermal power plants are designed for determined solar radiation conditions, therefore in the case of greater radiation conditions the system cannot harness all the thermal energy solar available, since the power of the turbine and of the generator would be exceeded. These types of plants have, therefore, some sort of regulating system to leave part of the collectors out of service, in this case high radiation collectors. On the other hand, neither the steam turbine nor the electric generator could release more power than its power designated to the electric network, however, part of this electric power is consumed in driving ancillary services.

Additionally, these plants are characterised by having a high energy consumption for pumping the thermo fluid and the supplying water to the steam generator. In the current plants all the pumps are driven by electric motors, some of them with speed variators.

Therefore in the periods when the solar radiation is greater than the designed radiation, the solar field is being underused, since part of the collectors is out of service and on the other hand a large amount of electric energy is consumed by the ancillaries.

### Description of the Invention

One aspect of the invention refers to a method for increasing the net electric power of solar thermal power plants discharged in the electric network comprising a plurality of ancillary service pumps involving a significant consumption. On most of the year, the solar radiation is greater than the designed radiation, i.e., the radiation necessary for producing the steam sufficient to reach the maximum electric power of the plant. Therefore in these periods part of the solar collectors must be left out of service. The proposed method uses the solar field in a more efficient manner harnessing these collectors, which would be out of service, for generating additional steam and driving the ancillary service pumps of the plant. Thus, in these periods of high radiation, the net electric power will be greater due to the fact that the electric consumption in ancillary services has been reduced.

The ancillary service pumps are driven by means of steam turbines (turbo pumps), using to that end the thermal energy produced in the plant in a more direct manner, reducing electric consumption of ancillary services and therefore obtaining a greater net electric energy in the interface with the electric network. According to other features of the invention:

The thermo fluid pumps are driven by means of steam turbines.

The water supply pumps supplying water to the steam generator are driven by means of steam turbines.

The water supply pumps supplying water to the steam generator and the thermo fluid pumps are driven by means of steam turbines.

### Brief Description of the Drawings

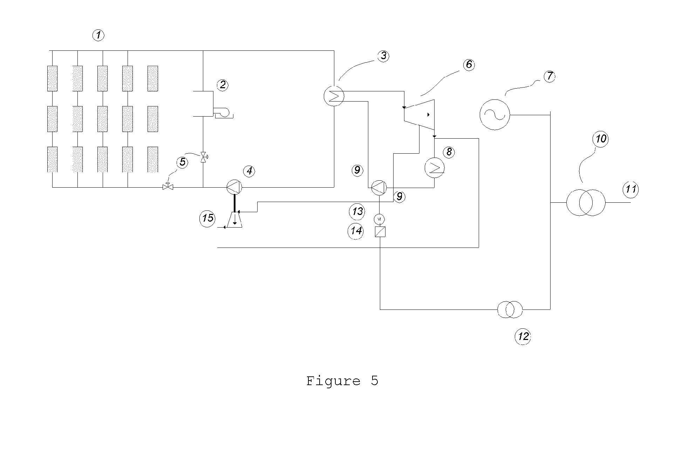

To complement the description which is being made and for the purpose of aiding to better understand the features of the invention, a set of drawings is attached as an integral part of said description in which the following has been depicted with an illustrative and non-limiting character:

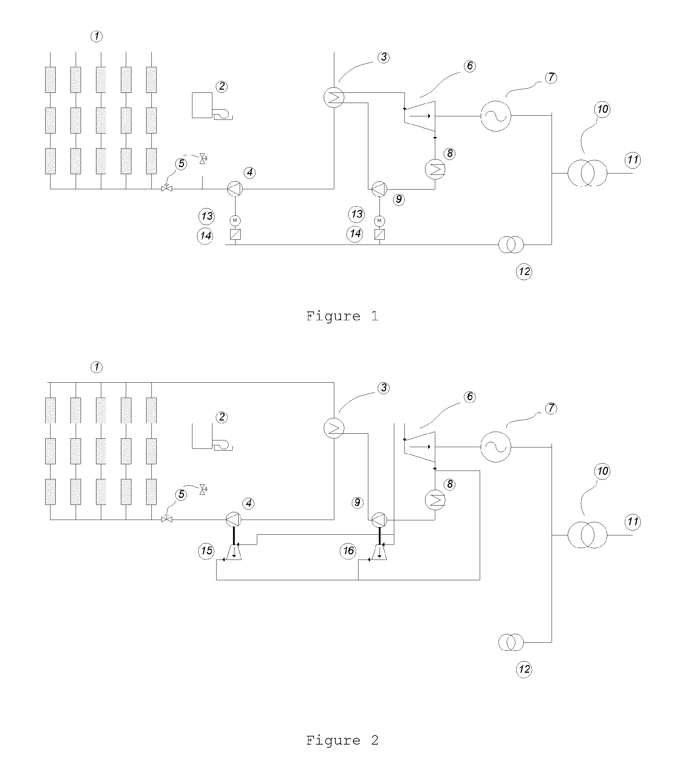

Figure 1 shows a simplified diagram of a solar thermal plant with the electric operations of the pumps; only the thermo fluid pumps and water supply pumps supplying water to the steam generator have been considered, wherein:
   (1) Solar collectors
   (2) Auxiliary burner of natural gas or another fuel.
   (3) Steam generator. Thermo fluid heat and steam exchanger.
   (4) Thermo fluid pump.
   (5) Thermo fluid regulating valves.
   (6) Main steam turbine
   (7) Electric generator
   (8) Condenser.
   (9) Water supply pump supplying water to the steam generator.
   (10) Main transformer
   (11) Electric network
   (12) Ancillary service transformer
   (13) Electric motors
   (14) Electric motor speed variators.
Figure 2 shows the simplified diagram of the solar thermal plant of Figure 1 with the operations of the main pumps by means of steam turbines, wherein:
   (1) Solar collectors
   (2) Auxiliary burner of natural gas or another fuel.
   (3) Steam generator. Thermo fluid heat and steam exchanger.
   (4) Thermo fluid pump.
   (5) Thermo fluid regulating valves.
   (6) Main steam turbine
   (7) Electric generator
   (8) Condenser.
   (9) Water supply pump supplying water to the steam generator.
   (10) Main transformer
   (11) Electric network
   (12) Ancillary service transformer
   (15) Steam turbine to drive the thermo fluid pump
   (16) Steam turbine to drive the water supply pump supplying water to the steam generator.

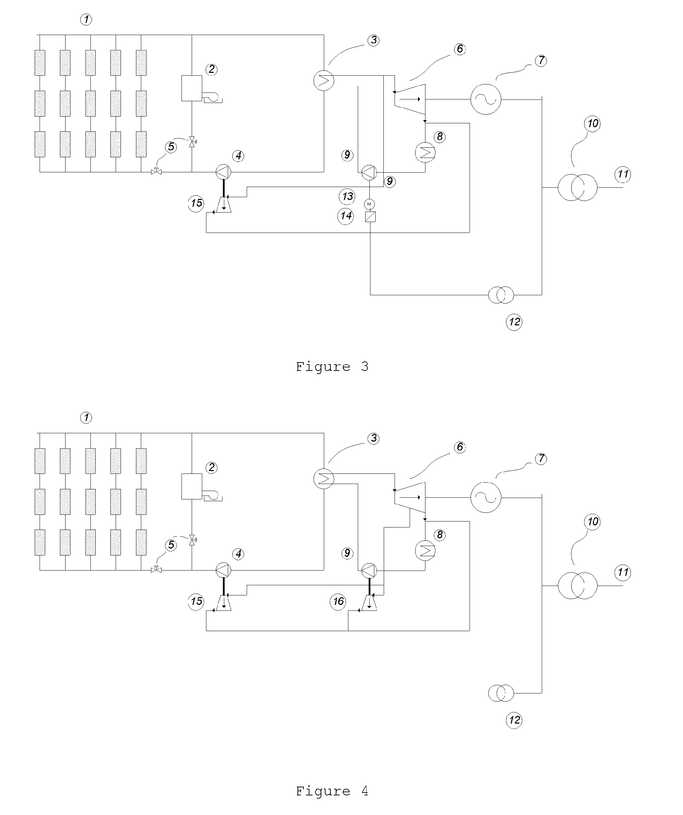

Figure 3 shows the simplified diagram of the solar thermal plant of Figure 1 with the operations of the thermo fluid pumps by means of steam turbines, wherein:
   (1) Solar collectors
   (2) Auxiliary burner of natural gas or another fuel.
   (3) Steam generator. Thermo fluid heat and steam exchanger.
   (4) Thermo fluid pump.
   (5) Thermo fluid regulating valves.
   (6) Main steam turbine
   (7) Electric generator
   (8) Condenser.
   (9) Water supply pump supplying water to the steam generator
   (10) Main transformer
   (11) Electric network
   (12) Ancillary service transformer
   (13) Electric motors
   (14) Speed variators for electric motors.
   (15) Steam turbine to drive the thermo fluid pump.
Figure 4 shows the simplified diagram of the solar thermal plant of Figure 1 with the operations of the main pumps by means of steam turbines supplied with steam from an extraction of the main turbine, wherein:
   (1) Solar collectors
   (2) Auxiliary burner of natural gas or another fuel.
   (3) Steam generator. Thermo fluid heat and steam exchanger.
   (4) Thermo fluid pump.
   (5) Thermo fluid regulating valves.
   (6) Main steam turbine
   (7) Electric generator
   (8) Condenser.
   (9) Water supply pump supplying water to the steam generator.
   (10) Main transformer
   (11) Electric network
   (12) Ancillary service transformer
   (15) Steam turbine to drive the thermo fluid pump
   (16) Steam turbine to drive the water supply pump supplying water to the steam generator
Figure 5 shows the simplified diagram of the solar thermal plant of Figure 1, with the operations of the thermo fluid pumps by means of steam turbines supplied with steam from an extraction of the main turbine, wherein:
   (1) Solar collectors
   (2) Auxiliary burner of natural gas or another fuel.
   (3) Steam generator. Thermo fluid heat and steam exchanger.
   (4) Thermo fluid pump.
   (5) Thermo fluid regulating valves.
   (6) Main steam turbine
   (7) Electric generator
   (8) Condenser.
   (9) Water supply pump supplying water to the steam generator.
   (10) Main transformer
   (11) Electric network
   (12) Ancillary service transformer
   (13) Electric motors
   (14) Speed variators for electric motors.
   (15) Steam turbine to drive the thermo fluid pump

### Description of a Preferred Embodiment of the Invention

The present invention refers to a method for increasing the net electric power of solar thermal power plants with a better use of the solar collectors such that electric consumption of the ancillary services is reduced.

The more important ancillaries of the plant are driven by steam turbines (turbo pumps) instead of being driven by electric motors (motor pumps) as is currently done. In a manner which allows harnessing, in the periods of high solar radiation the thermal energy of the solar collectors, which would otherwise be out of service. Therefore, the steam pressure at the inlet of the turbine must be controlled regulating the amount of solar collectors in service as is currently done, but since the ancillaries have greater steam consumption, collectors which would otherwise be out of service will be started .

The fact of using steam turbines for driving the pumps has the following advantages:
- Using solar thermal energy which could not otherwise be harnessed in case of high radiation.
- Improving the overall operating performance, in any case.

The solar thermal power plants control system, in case of having radiation greater than the designed radiation, leaves some of the solar collectors (1) out of service when the generator (7) and the turbine (6) will have reached their designated power.

Therefore, the system object of the present invention, when operating the ancillary service pumps through steam turbines, allows harnessing the thermal energy which wound not be harnessed in these periods of high radiation.

On the other hand, the thermal energy from the solar collectors (1) changes into steam in the steam generator (3), to be changed into mechanical energy in the main steam turbine (6) and is finally converted in the generator (7) into electric energy, which is in part yielded to the electric network (11) through the main transformer (10). And another part of the electric energy generated by the generator (7) is consumed by the ancillary services, which are supplied through the ancillary service transformer (12). Inside the ancillary services which must be supplied in this type of electric plants, the thermo fluid pumps (4) and the water supply pumps supplying water to the steam generator (9) which are the more powerful pumps, stand out due to their power.

Therefore, for operating the pumps of the plant through electric motors (13), the energy from the solar collectors suffers six energy transformations through the aforementioned elements: steam generator (3), main steam turbine (6), electric generator (7), ancillary services transformer (12), electric motor speed variators (14) and electric motors (13).

In the case of driving the pumps as proposed in the present invention, the energy from the solar collectors (1) changes into steam in the steam generator (3), and with part of the generated steam, the steam turbines (15, 16) driving the thermo fluid pumps (4) and water supply pumps supplying water to the steam generator (9), are driven. Thus, only two energy transformations are produced, therefore obtaining a greater operating performance with the consequent energy saving and the possibility of obtaining a greater net electric power from the solar thermal plant, including periods of solar radiation lower than the designed radiation.

An embodiment of the invention illustrated in Figure 3 refers to the operation of the thermo fluid pumps by means of steam turbines where the steam is obtained from the steam generator.

Another embodiment of the invention illustrated in Figure 5 refers to the operation of the thermo fluid pumps by means of steam turbines where the steam is obtained from an extraction of the main steam turbine.

In these two embodiments the operation of the thermo fluid pumps is performed through turbo pumps using the thermal energy obtained from the sun in the form of steam, coming from the same circuit which supplies the main steam turbine, or from an extraction thereof. It thus allows a better harnessing of the solar field.

Other embodiments of the invention illustrated in Figures 2 and 4 refer to the operation of the thermo fluid pumps and water supply pumps supplying water to the steam generator by means of steam turbines.

In this case, the operations of the thermo fluid pumps and of water supply pumps supplying water to the steam generator are performed through steam turbines, turbo pumps, using the thermal energy obtained from the sun in the form steam, coming from of the same circuit which supplies the main steam turbine or from an extraction thereof.

## Claims

1. A method for increasing the net electric power of solar thermal power plants comprising a plurality of ancillary service pumps (4, 9) **characterised in that** it uses solar collectors in a more efficient manner, generating additional steam to drive the ancillary service pumps (4, 9) by means of steam turbines (15, 16) using to that end thermal energy which cannot be harnessed in generating electricity due to the solar radiation being greater than the designed radiation of the plant and the plant is already producing its maximum electric power.

2. The method for increasing the net electric power of solar thermal power plants according to claim 1, **characterised in that** the thermo fluid pumps (4) are driven by means of steam turbines (15).

3. The method for increasing the net electric power of solar thermal power plants according to claim 1, **characterised in that** the water supply pumps (9) supplying water to the steam generator are driven by means of steam turbines (16).

4. The method for increasing the net electric power of solar thermal power plants according to claim 1, **characterised in that** the water supply pumps (9) supplying water to the steam generator and the thermo fluid pumps (4) are driven by means of steam turbines (16, 15).
